# EUROPÄISCHE PATENTSCHRIFT

(11) **EP 1 664 229 B1**
(45) Veröffentlichungstag und Bekanntmachung des Hinweises auf die Patenterteilung: **27.06.2007**
(21) Anmeldenummer: 04765217.7
(22) Anmeldetag: 15.09.2004
(51) Int. Cl.: C09J 201/00

(54) **WASSERLÖSLICHER SCHMELZKLEBSTOFF**
WATER SOLUBLE HOT-MELT-TYPE ADHESIVE
COLLE FUSIBLE HYDROSOLUBLE

(30) Priorität: 24.09.2003 DE 10344126
(43) Veröffentlichungstag der Anmeldung: 07.06.2006
(73) Patentinhaber: Henkel Kommanditgesellschaft auf Aktien, 40589 Düsseldorf (DE)
(72) Erfinder: MÖLLER, Thomas, 40593 Düsseldorf (DE); BUXHOFER, Horst, 40699 Erkrath (DE); CAVALLI, Dario, I-20125 Milano (IT)
(86) Internationale Anmeldenummer: PCT/EP2004/010303
(87) Internationale Veröffentlichungsnummer: WO 2005/033243

(56) Entgegenhaltungen:
- WO-A-92/22606
- US-A- 3 474 055
- PATENT ABSTRACTS OF JAPAN Bd. 0142, Nr. 02 (C-0713), 25. April 1990 (1990-04-25) & JP 2 041385 A (TONBO ENPITSU:KK), 9. Februar 1990 (1990-02-09)
- PATENT ABSTRACTS OF JAPAN Bd. 1997, Nr. 02, 28. Februar 1997 (1997-02-28) & JP 8 269416 A (SEKISUI CHEM CO LTD), 15. Oktober 1996 (1996-10-15)

## Beschreibung

Die vorliegende Erfindung betrifft einen wasserlöslichen oder wasserdispergierbaren Schmelzklebstoff, dessen Herstellung, und seine Verwendung zum Verkleben von recyclebaren bzw. mehrfach verwendbaren Materialien, sowie cellulosehaltige Materialien, die den erfindungsgemäßen Schmelzklebstoff enthalten.

Schmelzklebstoffe sind Klebstoffe, die als Schmelze auf die zu verbindenden Substrate aufgetragen werden und nach dem Zusammenfügen beim Abkühlen durch Verfestigung abbinden.
Es sind sowohl haftklebrige, als auch blockfeste, granulierbare Klebstoffsysteme auf dem Markt.
Schmelzklebstoffe, die bei 20 °C permanent klebrig sind und klebfähig bleiben, werden als Haftschmelzklebstoffe bezeichnet. Haftschmelzklebstoffe haften bei leichtem Anpressdruck sofort auf fast allen Substraten.
Wasseraktivierbare Schmelzklebstoffe werden im flüssigen Zustand auf ein Substrat aufgetragen und liegen nach dem Abkühlen als scheinbar trockner, nicht klebfähiger Film auf dem Substrat vor. Diese Klebeschicht wird auch als Gummierung bezeichnet. Bei der Verarbeitung des beschichteten Substrats wird durch Befeuchtung mittels Wasser die Gummierung klebrig gemacht.

Wasserlösliche oder wasserdispergierbare Schmelzklebstoffe werden in vielen Bereichen angewendet, beispielsweise dienen sie zum Verkleben von recyclebaren bzw. mehrfach verwendbaren Materialien.
Unter recyclebaren bzw. mehrfach verwendbaren Materialien werden im Rahmen der Erfindung insbesondere cellulosehaltige Materialien, beispielsweise Papier, Karton, Pappe, Wellpappe, und Spanholz verstanden. Anwendungen wasserlöslicher oder wasserdispergierbarer Schmelzklebstoffe für Verklebungen cellulosehaltiger Materialien finden sich z. B. auf dem Gebiet des Kartonverschlusses, der Buchbindung, der Tissue- oder Papiersack-Herstellung.
Unter "Tissue" wird ein besonders dünnes, weiches, überwiegend holzfreies Material, ggf. mit feiner (Trocken) Kreppung, verstanden. Das Material ist sehr saugfähig und weist in einer Einzellage in der Regel ein Flächengewicht von > 25 g/m² (vor der Kreppung) auf. Aus solchen Tissue-Verbunden werden Hygienepapiere, d. h. hauptsächlich Toilettenpapier, Papiertaschentücher oder Kosmetiktücher hergestellt.
Klebstoffe, die zur Verklebung dieser Hygienepapiere eingesetzt werden, sollen nach Möglichkeit vollständig wasserlöslich sein. Dieses Erfordernis beruht auf der hohen Recyclingquote bei der Herstellung von Hygienepapieren, d. h. daß Produktionsabfälle möglichst direkt wieder bei der Herstellung neuer Papierlagen eingesetzt werden müssen. Hierzu ist es jedoch erforderlich, daß die Verklebung zwischen den einzelnen Papierlagen vollständig aus einem Recycling-Faserbrei entfernt wird. Wasserunlösliche oder schlecht wasserlösliche Klebstoffbestandteile, die während der Produktion einer neuen Papierlage aus dem recycelten Fasermaterial in die Papierbahn geraten, können zu schwerwiegenden Produktionsausfällen führen. Üblicherweise bilden solche Klebstoffreste in den recycelten Papierbahnen sogenannte "Stickies", d. h. klebrige Punkte die zu einem Festkleben der Papierbahn an Walzen und ähnlichen Führungselementen für die Papierbahn führen können. Dies hat üblicherweise ein Abreißen der Papierbahn und langwierige Produktionsunterbrechungen zur Folge. Es ist daher nicht nur erforderlich, daß die Verklebung durch Wasser wieder lösbar ist und dabei zu einer Dispersion des Klebstoffs im Wasser führt, sondern der Klebstoff selbst soll vollständig in Wasser löslich sein. Dadurch wird verhindert, daß eventuell ausgetragene Klebstoffreste fein verteilt zu klebrigen Agglomeraten (Stickies) führen.

Ein weiteres breites Anwendungsgebiet wasserlöslicher oder wasserdispergierbarer Schmelzklebstoffe ist die Etikettierung, beispielsweise von Kunststoff-, insbesondere PET (Polyethylenterephthalat)-, oder Glasflaschen. Bevor beispielsweise Getränkeflaschen aus Glas wiederverwendet oder Kunststoffflaschen recycelt werden können, müssen die alten Etiketten entfernt werden. Das Lösen der Klebeverbindung zwischen Etikett und Substrat geschieht in der Regel in 40 bis 70 °C warmen Wasser und unter Elektrolytzusatz, beispielsweise Natriumhydroxid. Wasserlösliche oder wasserdispergierbare Schmelzklebstoffe erleichtern den Ablöseprozess sowie die Desintegration der häufig mehrschichtig aufgebauten Etiketten.

Schmelzklebstoffe, die einen wiederanfeuchtbaren (wasseraktivierbaren) Klebstofffilm bilden, werden beispielsweise zur Herstellung von Briefumschlägen, Briefmarken u. ä. verwendet.

Die EP 0761 795 beschreibt eine wasserdispergierbare Schmelzklebstoffzusammensetzung, enthaltend 10 bis 90 Gew.-% eines sulfonierten Polyesters und 5 bis 40 Gew.-% eines verträglichen Wachsverdünners mit einem Molekulargewicht unter 500 g/Mol, enthaltend mindestens eine polare funktionelle Gruppe, wobei die Gruppe mit einer Konzentration größer als 3 x 10⁻³ Äquivalente pro Gramm vorliegt.
Diese Schmelzklebstoffe werden bevorzugt im Verpackungsbereich angewendet. Um den Schmelzklebstoff gut in Wasser zu dispergieren, muss allerdings gemäss der Beispiele 1 und 3 und den Ausführungen auf Seite 5, Zeilen 45 bis 46, der Anteil des Wachsverdünners bei mindestens 20 Gew.-% liegen. Erst bei dieser Konzentration entfaltet der Wachsverdünner, der den molekularen Aufbau von Emulgatoren besitzt, ausreichende emulgierende Eigenschaften für diese Schmelzklebstoffzusammensetzungen. Für manche Anwendungen nachteilig ist ferner die Abhängigkeit der Wasserempfindlichkeit (Wasserlöslichkeit) dieser Schmelzklebstoffe von der Ionenstärke der wässrigen Umgebung.

Die EP 0737 233 beschreibt eine Sulfonat-haltige, in Wasser dispergierbare Klebstoff-Zusammensetzung, umfassend eine verzweigte in Wasser dispergierbare Polyester-Zusammensetzu ng, die sich zum Verkleben von Substraten eignet, wobei mindestens eines der Substrate aus der Gruppe ausgewählt ist, die aus Papier, Karton und Holzschliff besteht. Nachteilig an solchen Klebstoff-Zusammensetzungen ist eine zu erwartende schlechte biologische Abbaubarkeit.

In der US 3,474,055 werden Schmelzklebstoffe für das Papierrecycling beschrieben, die 5 bis 40 Gew.-% einer wasserlöslichen kristallinen Polyhydroxyverbindung mit drei oder mehr Hydroxylgruppen, 4 bis 18 C-Atomen pro Molekül und einem Schmelzpunkt von wenigstens 100°C, 35 bis 75 Gew.-% eines aromatischen Kohlenwasserstoff-Formaldehyd-Harzes und 25 bis 65 Gew.-% eines Ethylen-Vinylacetat-Copolymeren mit 17 bis 42 Gew.-% Vinylacetat enthalten.

In der WO 92/22606 werden Schmelzklebstoffe beschrieben, die als Hauptmenge ein schmelzbares Saccharid und eine geringere Menge eines Polysaccharids auf Stärkederivat-Basis enthalten. Diese Schmelzklebstoffe besitzen jedoch den Nachteil, dass in der Schmelze rasch Kararnellisierungsreaktionen eintreten und diese zu starken Verfärbungen führen bis hin zu Vercrackungen. Das in den Beispielen verwendete Methylglucosid ist darüber hinaus eine teure und gering verfügbare Komponente, die zu hohen Kosten bei den aus ihr hergestellten Schmelzklebstoffen führt.

Ausgehend von diesem Stand der Technik ergab sich die Aufgabe, einen wasserlöslichen oder wasserdispergierbaren Schmelzklebstoff bereitzustellen, wobei die bisherigen positiven Verwendungs- und Gebrauchseigenschaften der Schmelzklebstoffe möglichst erhalten bleiben.
Insbesondere besteht ein Bedarf an wasserlöslichen oder wasserdispergierbaren Schmelzklebstoffen, die über eine sehr gute Wärmestabilität verfügen.
Des weiteren besteht ein Bedarf an Schmelzklebstoffen, die gut biologisch abbaubar sind.
Bei der Verarbeitung auf Hochleistungs-Verpackungsmaschinen oder auf Maschinen zur Papierherstellung soll der Schmelzklebstoff einen störungsfreien Maschinenlauf sowie ausreichende Haftung und Klebkraft gewährleisten.
Eventuell mit Schmelzklebstoff kontaminierte Maschinenteile sollen sich auf einfache und leichte Weise reinigen lassen.
Der Schmelzklebstoff soll eine Wiederverwertung klebstoffhaltiger Produkte auf einfache umweltfreundliche und wirtschaftliche Weise ermöglichen.

Die erfindungsgemäße Lösung dieser Aufgabe ist den Patentansprüchen zu entnehmen.
Sie besteht im wesentlichen in einem Schmelzklebstoff, enthaltend
A) 20 bis 95 Gew.-%, bevorzugt 30 bis 80 Gew.-%, mindestens eines Zuckeralkohols und
B) 5 bis 80 Gew.-%, bevorzugt 20 bis 70 Gew.-%, mindestens eines wasserlöslichen oder wasserdispergierbaren Polymeren.
   und
C) 0 bis 20 Gew.-% in Wasser nichtlösliche thermoplastische Polymere

Der Schmelzklebstoff ist wasserdispergierbar, in einer besonders bevorzugten Ausführungsform der Erfindung ist der Schmelzklebstoff wasserlöslich.
Die erfindungsgemäßen Schmelzklebstoffe zeichnen sich insbesondere durch eine sehr gute Thermostabilität aus. So weisen sie nach Lagerung bei einer Temperatur von 180°C über einen Zeitraum von 3 Stunden eine Farbzahl nach Gardner (DIN ISO 4630) kleiner bis gleich 10 auf.

Im Rahmen der Erfindung wird unter dem Begriff "wasserlöslich" verstanden, dass eine 1,5 Gew.-%ige Lösung des erfindungsgemäßen Schmelzklebstoffes in deionisiertem Wasser bei Raumtemperatur über einen Zeitraum von 5 bis 60 Minuten visuell klar und homogen erscheint.

Unter "wasserdispergierbar" wird verstanden, dass im Aufschließbarkeitstest (Alkalische Lösung) gemäß EP 0737233 B1 auf Seite 11, Zeilen 21 bis 36 und insbesondere im Aufschließbarkeitstest (Neutral) gemäß EP 0737233 B1 auf Seite 11, Zeilen 1 bis 19, keine Klebstoffrückstände auf einem Probeblatt zurückbleiben.

Unter "selbstdispergierbare Polymere" werden im erfindungsgemäßen Sinne Polymere verstanden, die durch Zusatz lediglich geringer Mengen oder ohne Zusatz von Dispergierhilfen in deionisiertem Wasser dispergierbar sind. Derartige Polymere erfordern höchstens einen Zusatz von Dispergiermitteln in einer Größenordnung von etwa 5 Gew.-%, bevorzugt weniger als 3 Gew.-% und insbesondere bevorzugt weniger als 1 Gew.-%, bezogen auf die Masse des Polymeren. Die 5 Gew.-% Dispersion solcher Polymeren zeigt bei Lagerung bei Raumtemperatur über einen Zeitraum von 1 bis 24 Stunden keine visuell erkennbare makroskopische Phasentrennung.

Auf polymere Verbindungen bezogene Molekulargewichtsangaben beziehen sich, soweit nicht anders angegeben ist, auf das Zahlenmittel des Molekulargewichts (Mₙ). Alle Molekulargewichtsangaben beziehen sich, soweit nicht anders angegeben ist, auf Werte, wie sie durch Gelpermeationschromatographie (GPC) erhältlich sind.

"Zuckeralkohole" sind zuckerähnliche Polyole und entstehen beispielsweise aus Monosaccariden durch Reduktion der Carboxyl-Gruppe. Zuckeralkohole schmecken süß und finden deshalb beispielsweise als Zuckeraustauschstoffe Verwendung.
Die im Rahmen der Erfindung eingesetzten Zuckeralkohole oder auch Zuckeraustauschstoffe sind vorzugsweise bei Raumtemperatur feste Polyole mit 4 bis 14 Hydroxylgruppen pro Molekül mit einem Schmelzpunkt im Bereich von 70 bis 260°C, bevorzugt von 90 bis 170°C.

Bevorzugt weisen die eingesetzten Zuckeralkohole eine relative Molmasse Mᵣ von 60 bis 500 g/mol, bevorzugt von 100 bis 500 g/mol, auf.
Die erfindungsgemäß eingesetzten Zuckeralkohole besitzen keine reduzierenden Eigenschaften, d.h. Kupfer-, Silber- und Wismut-Salze werden in Lösung bei Zugabe des entsprechenden Zuckeralkohols nicht reduziert.

Bevorzugt sind die Zuckeralkohole ausgewählt aus der Gruppe der Aldite, insbesondere aus der Gruppe der Tetrite, Pentite oder Hexite. Konkrete Beispiele sind Arabit, Dulcit, Erythrit, Mannit, Ribit, Sorbit oder Xylit, oder Mischungen daraus.
Besonders bevorzugt wird als Zuckeralkohol Mannit und/oder Sorbit eingesetzt.

In einer weiteren Ausführungsform der Erfindung werden als Zuckeralkohole hydrierte Saccharide, insbesondere hydrierte Disaccharide, allein oder in Mischung mit mindestens einem Aldit eingesetzt.

In einer besonders bevorzugten Ausführungsform der Erfindung wird ein als Isomalt oder Palatinit® bekanntes nahezu äquimolares Gemisch aus 1,1-GPM (1-0-α-D-Glucopyranosyl-D-mannit) und 1,6-GPS (6-0-α-D-Glucopyranosyl-D-sorbit) (Handelsbezeichnungen: Isomalt der Firma Palatinit oder C*Isomaltidex 16500 der Firma Cerestar), 1,1-GPM, 1,6 GPS, Maltitol (Maltit) oder Lactitol (Lactit), allein, in Mischung untereinander und/oder in Mischung mit mindestens einem Aldit, als Zuckeralkohol eingesetzt. Weitere geeignete Zuckeralkohle sind hydrierter Glukose-Sirup, hydrierter Maltit-Sirup, Pentaerythrit, Dipentaerythrit oder Polydextrose.

Bevorzugt ist der Zuckeralkohol eine Mischung aus Aldit und hydriertem Saccharid, insbesondere eine Mischung aus Sorbitol und/oder Mannit mit Isomalt, Lactit, Maltit oder Polydextrose.

In einer besonderen Ausführungsform der Erfindung ist der Zuckeralkohol bis 50 Gew.-%, bevorzugt bis 30 Gew.-%, bezogen auf die Masse des Zuckeralkohols, durch mindestens ein insbesondere bei Raumtemperatur, flüssiges Polyol ersetzt.

Geeignete flüssige Polyole sind insbesondere Glycerin oder Polyglycerine, wie Diglycerin, Pentaglycerin oder Decaglycerin. Auch entsprechend flüssige alkoxylierte Polyglycerine sind einsetzbar.
Die flüssigen Polyole können einzeln oder als Mischung eingesetzt werden.

Weisen die eingesetzten Zuckeralkohle synthesebedingt Bestandteile mit weniger als 4 oder mehr als 14 Hydroxygruppen pro Molekül auf, so beträgt der Anteil an Bestandteilen mit 4 bis 14 Hydroxylgruppen pro Molekül mehr als 50 Gew.-%, bezogen auf die Gesamtmasse des eingesetzten Zuckeralkohols.

Die erfindungsgemäßen Schmelzklebstoffe enthalten neben den Zuckeralkoholen 5 bis 80 Gew.-%, bevorzugt 20 bis 70 Gew.-%, wasserlösliche oder wasserdispergierbare Polymere.
Die durchschnittliche molare Masse dieser Polymeren beträgt mindestens 1000 g/mol, vorzugsweise mindestens 10000 g/mol und höchstens 100 000 g/mol, vorzugsweise höchstens 80000 g/mol.

Als wasserlösliche oder dispergierbare, bevorzugt selbstdispergierende Polymere werden Polymere aus der Gruppe Polysaccharide, Polyalkylenoxide, Polyvinylalkohole, Polyvinylpyrrolidone, Copolymere des Vinylpyrrolidons mit vinylischen Monomeren, wie z. B. Vinylacetat, Vinylimidazol oder Acrylsäure oder deren Ester eingesetzt.
Bei den einzusetzenden Polyalkylenoxiden sind Polyalkylenoxide bevorzugt, die ein Ethylenoxid-Anteil von 50 bis 100 % aufweisen und eine molare Masse von 500 g/mol bis 20 000 g/mol besitzen. Insbesondere bevorzugt sind Polyalkylenoxide, wie sie in der WO 03/010256 auf Seite 4, Zeile 16 bis Seite 5, Zeile 22 offenbart sind.
Desweiteren werden als wasserlösliche oder wasserdispergierbare Polymere Propfcopolymere eingesetzt, die ebenfalls in der WO 03/010256 beschrieben sind.

Als insbesondere wasserlösliche Polymere werden eingesetzt: Polyvinylmethylether, Polyethyloxazolin, Copolymere des Ethyloxazolins mit anderen Alkyloxazolinen, wie z. B. Phenyloxazolin, Polyamide, Polyester, insbesondere sulfongruppenhaltige Polyester, oder Polyurethane. Aus der Gruppe der Polyurethane sind insbesondere Polyurethane bevorzugt, die in der EP 0 674 675 offenbart werden.
In einer besonders bevorzugten Ausführungsform der Erfindung enthält der erfindungsgemäße Schmelzklebstoff 40 bis 95 Gew.-% mindestens eines Zuckeralkohols sowie als wasserlösliches oder wasserdispergierbares Polymer, 5 bis 60 Gew.-% mindestens eines sulfongruppenhaltigen Polyesters. Bevorzugte sulfogruppenhaltige Polyester werden in der EP 737 233 offenbart.
Bevorzugt werden solche wasserlöslichen oder wasserdispergierbaren Polymere eingesetzt, die in der Zuckeralkoholschmelze löslich oder dispergierbar sind.
Unter "in der Zuckeralkoholschmelze löslich oder dispergierbar" wird verstanden, dass die Mischung aus Zuckeralkohol und Polymer bei einer Temperatur von 100 bis 150°C über einen Zeitraum von 24 Stunden keine visuell erkennbare makroskopische Phasentrennung zeigt.
Alle oben genannte Polymere können einzeln oder als Mischung eingesetzt werden.

Das Gemisch aus mindestens einem Zuckeralkohol und mindestens einem wasserlöslichen oder wasserdispergierbaren Polymeren enthält 0 bis 75 Gew.-%, insbesondere 5 bis 70 Gew.-%, Polysaccarid.

Aus der Gruppe der Polysaccharide werden insbesondere Xyloglucane, Glucomannoglycane, Galactomannane, Arabinogalactane, Galacturonane, Laminaran, Glykane, Chitin, Chitosan, Glucane, Mannane, Arabinane, Galactane, Xylane, Hemicellulose und Pflanzenpolysaccharide eingesetzt. Diese Polysaccharide und deren Eigenschaften werden bei G. O. Aspinall, The Polysaccarides, Band 1-3, Academic Press (1982-1985), beschrieben. Insbesondere bevorzugt sind Polysaccharide aus der Gruppe der Glucane, vorzugsweise Stärke oder Stärkederivate. Beispiele sind Kartoffelstärke, Maisstärke, Weizenstärke, Reisstärke oder Tapiokastärke.

Geeignete Stärkederivate sind nichtionische, anionische oder kationische Stärkeether, z. B. Stärkecarboxymethylether, Hydroxyethylstärken, Hydroxypropylstärken usw.
Weiterhin geeignet sind Stärkeester, oxidierte Stärken und Propfpolymere auf Stärkebasis.
Geeignete Stärkederivate sind auch die Abbauprodukte der Stärke. Bevorzugt genannt seien Dextrine, wie z. B. Weißdextrine, Gelbdextrine oder Maltodextrine. Aber auch andere modifizierten Stärken sind geeignet, wie z. B. partiell abgebaute Stärken, Quellstärken, lösliche Stärken oder hydrolytisch abgebaute Stärken. Als Literatur zu Stärke und ihren Derivaten sei genannt: R. L. Whistler, Starch: Chemistry and Technology, Academic Press (1984) und R. L. Whistler, Methods in Carbohydrate Chemistry, Band 4, Academic Press (1962-1980).

Andere Glucane sind Cellulose und deren Derivate, wie z. B. Hydroxypropylcellulosen, Methylhydroxypropylcellulosen usw. Als Literatur zu Cellulose und ihren Derivaten sei genannt: R. L: Whistler, Methods in Carbohydrate Chemistry, Band 3, Academic Press (1962-1980).

Weitere Beispiele für Polysaccharide sind Oligofructose, Inulin, Alginsäure, Gummi Arabicum, Pektine, Traganth, Agar, Carrageen, Pullulan, Guar und Polydextrose. (Handelsname: z.B. Litesse von der Fa. Danisco). Geeignet sind alle Polysaccharide, die in den Zuckeralkoholschmelzen löslich oder dispergierbar sind. Bevorzugt werden solche Polysaccharide, die neben der Löslichkeit in der Zuckeralkoholschmelze zusätzlich auch in Wasser löslich oder dispergierbar sind. Weiterhin kann der erfindungsgemässe Schmelzklebstoff 0 bis 40 Gew.-%, bevorzugt 5 bis 25 Gew.-%, eines Lösungsvermittlers enthalten. Lösungsvermittler im Sinne der Erfindung sind Verbindungen, die die Löslichkeit des wasserlöslichen Polymeren und/oder des Polysaccarids in der Polyolschmelze begünstigen. Es handelt sich hierbei beispielsweise um alkoxylierte, insbesondere ethoxylierte organische Säuren oder Alkohole, wobei die entsprechenden Säuren oder Alkohole eine C-Kettenlänge von C6 - C22 aufweisen. Der Alkoholrest kann hierbei linear oder in 2-Stellung methylverzweigt sein, wie es üblicherweise bei Oxoalkoholen der Fall ist. Insbesondere sind jedoch lineare Reste aus Alkoholen nativen Ursprungs mit 12 bis 18 Kohlenstoffatomen bevorzugt, wie z.B. aus Kokos-, Palm-, Talgfett- oder Oleylalkohol. Der durchschnittliche Alkoxylierungsgrad beträgt 2 bis 40. Konkrete Beispiele sind: C13-15-Alkohole mit 3 EO, 5 EO, 7 EO oder 8 EO; C12-18-Alkohole mit 3 EO, 5 EO oder 7 EO; Talgalkohol mit 14 EO, 25 EO, 30 EO oder 40 EO. Bei den alkoxylierten Säuren handelt es sich konkret um ethoxylierte Laurinsäure, Palmitinsäure oder Ölsäure, beispielsweise Ölsäure mit 2 bis 4 EO. Als Lösungsvermittler sind besonders Umsetzungsprodukte von Fettsäuren mit Sorbitan geeignet, die beispielsweise unter den Handelsnamen "Span" oder "Tween" kommerziell erhältlich sind. Hierzu gehören beispielsweise Sorbitanmono-(di,tri)laurat, -oleat, -palmitat und -stearat.
Auch Lösungsvermittler auf Basis von Glycerinestern sind geeignet. Hierzu gehören unter anderem Glycerinmonofettsäureester. Beispiele sind Glycerinmonolaurinsäureester, Glycerinmonoölsäureester, u.ä.
Als Lösungsvermittler sind auch Verbindungen geeignet ausgewählt aus der Gruppe des gehärteten Rizinusöls und dessen alkoylierten, vorzugsweise ethoxylierten Derivaten. Im Rahmen der vorliegenden technischen Lehre ist es bevorzugt gehärtetes Rizinusöl, welches mit 10 bis 30 Mol Ethylenoxid umgesetzt wurde. Weiterhin sind Umsetzungsprodukte der Ricinolsäure mit Polyolen einsetzbar. Ein konkretes Beispiel hierfür ist das auch als Lebensmittelzusatzstoff verwendete Polyglycerin-Polyricinoleat (E 476).

Der Lösungsvermittler kann auch ionische Gruppe tragen. Bevorzugt werden hier Verbindungen aus der Gruppe der Fettalkoholsulfate, Alkylbenzolsulfonate, Alkylethersulfate und/oder der Sulfobernsteinsäure und deren Derivate ausgewählt.
Unter Fettalkoholsulfaten sind insbesondere C12-C14-Kokosalkoholsulfate bevorzugt. Als Alkylbenzolsulfonat kommen Dodecylbenzolsulfonate, Tetradecylbenzolsulfonate, Hexadecylbenzolsulfonate sowie deren technische Gemische in Form der Natriumsalze zum Einsatz. Konkrete Beispiele für Alkylethersulfate sind Ethersulfate auf Basis von Addukten von durchschnittlich 2 bis 3 Mol Ethylenoxid an technische C12-C14- bzw. C12-C18 Kokosfettalkoholfraktionen in Form ihrer Natrium- und/oder Magnesiumsalze.

Der erfindungsgemäße Schmelzklebstoff enthält 0 bis 20 Gew.-% weitere, in Wasser nichtlösliche thermoplastische Polymere enthalten. Genannt seien bevorzugsweise Ethylen-Vinylacetat-Copolymere, Ethylen-Vinylalkohol-Copolymere, Polyester, Polyamide, Polyurethane und Polyacrylate.
Weitere Zusätze können noch die in Schmelzklebstoffen üblichen Formulierungsbestandteile sein. Genannt seien 0 bis 50 Gew.-% klebrigmachende Harze. 0 bis 50 Gew.-% Wachse, 0 bis 20 Gew.-% rheologische Modifikatoren, 0 bis 10 Gew.-% Stabilisatoren, 0 bis 50 Gew.-% Füllstoffe, 0 bis 10 Gew.-% Pigmente, 0 bis 10 Gew.-% Farbstoffe oder Farbpigmente, insbesondere TiO₂.

In einer besonderen Ausführungsform der Erfindung enthält der erfindungsgemäße Schmelzklebstoff 0 bis 50 Gew.-%, bevorzugt 5 bis 45 Gew.-%, mindestens eines Harzes.
Das Harz bewirkt eine zusätzliche Klebrigkeit und verbessert die Verträglichkeit der Schmelzklebstoff-Komponenten. Es handelt sich dabei um
a) Hydroabietylalkohol und seine Ester, insbesondere seine Ester mit aromatischen Carbonsäuren wie Terephthalsäure und Phthalsäure,
b) vorzugsweise modifizierte Naturharze wie Harzsäuren aus Balsamharz, Tallharz oder Wurzelharz, z.B. vollverseiftes Balsamharz oder Alkylester von gegebenenfalls teilhydriertem Kolophonium mit niedrigen Erweichungspunkten wie z.B. Methyl-, Diethylenglykol-, Glycerin- und Pentaerythrit-Ester,
c) Acrylsäureester-Copolymerisate, vorzugsweise Styrol-Acrylsäureester-Copolymere,
d) Harze auf Basis funktioneller Kohlenwasserstoffharze und
e) SAA-Harze (Copolymere aus Styrol und Allylalkohol), z.B. SAA-100 von der Fa. Lyondell oder RJ-201 von der FA. Monsanto,
f) Terpenphenolharze,
g) Ketonharze.

Möglich ist es auch, als klebrigmachendes Harz einen Alkylester von teilhydriertem Kolophonium einzusetzen, wobei die Alkylgruppe vorzugsweise 1 bis 6 C-Atome enthält.
Bevorzugt ist es, Acrylsäureester-Copolymerisate einzusetzen.

In einer weiteren besonderen Ausführungsform ist in dem erfindungsgemäßen Schmelzklebstoff ein Wachs in einer Konzentration von 5 bis 50 Gew.-% enthalten.
Das verwendete Wachs kann natürlichen, chemisch modifizierten oder synthetischen Ursprungs sein. Als natürliche Wachse können pflanzliche Wachse, tierische Wachse, Mineralwachse oder petrochemische Wachse eingesetzt werden. Als chemisch modifizierte Wachse können Hartwachse wie Montanesterwachse, Sarsolwachse usw. eingesetzt werden. Als synthetische Wachse finden Polyalkylenwachse sowie Polyethylenglykolwachse Verwendung. Vorzugsweise werden petrochemische Wachse wie Petrolatum, Paraffinwachse, Mikrowachse sowie synthetische Wachse, insbesondere Polyethylenwachse mit Schmelzpunkten zwischen 85 und 140 °C und Molekulargewichten im Bereich von 500 bis 3 500, Paraffinwachse mit Schmelzpunkten im Bereich von 45 bis 70 °C und Molekulargewichten zwischen 225 und 500, mikrokristalline Wachse mit Schmelzpunkten im Bereich von 60 bis 95 °C sowie synthetische Fischer-Tropsch-Wachse mit Schmelzpunkten im Bereich von 100 bis 115 °C eingesetzt.

Die Stabilisatoren haben die Aufgabe, die Klebstoffzusammensetzung während der Verarbeitung vor Zersetzung zu schützen. Hier sind insbesondere die Antioxidantien zu nennen. Sie werden üblicherweise in Mengen bis zu 3 Gew.-%, vorzugsweise in Mengen von 10,1 bis 1,0 Gew.-% dem Schmelzklebstoff beigefügt.

Der erfindungsgemäße Schmelzklebstoff wird zum Verbinden von recyclebaren, insbesondere recyclebaren cellulosehaltigen Substraten durch Auftrag als Schmelze und durch Abbinden beim Abkühlen auf Raumtemperatur verwendet. Der erfindungsgemäße Schmelzklebstoff ist in der Regel bei 20 °C von fester Konsistenz und frei von Lösungsmitteln, die beim Auftrag aus der Schmelze stören würden.
Der erfindungsgemäße Schmelzklebstoff wird im allgemeinen durch Mischen der Komponenten hergestellt. Dazu wird zunächst der Zuckeralkohol bei einer Temperatur von 60 bis 260 °C, bevorzugt 100 bis 180 °C, insbesondere bevorzugt bei 140°C bis 175°C, aufgeschmolzen. In die Schmelze des Zuckeralkohols wird das mindestens eine wasserlösliche oder wasserdispergierbare Polymer sowie ggf. weitere, in Wasser nichtlösliche thermoplastische Polymere sowie weitere geeignete Zusätze zugegeben und bis zur Homogenität gerührt.
Von der homogenen Mischung wird der Wassergehalt bestimmt und ggf. durch Anlegen von Vakuum auf kleiner gleich 5 Gew.-% eingestellt.
Nach dem Abfüllen der vollständig homogenisierten Zusammensetzung in geeigneten Behältern läßt man die Schmelze abkühlen, wobei sie erstarrt. Der Schmelzklebstoff ist nun verwendungsfähig. Natürlich könnte die Schmelze auch ohne abzukühlen direkt auf das Material aufgetragen werden und so direkt zum Verkleben verwendet werden, ohne ein zwischengeschaltetes Abkühlen.
Üblicherweise wird der erfindungsgemäße Schmelzklebstoff jedoch wie andere handelsüblichen Schmelzklebstoffe vor seiner Anwendung aufgeschmolzen und dann auf das zu verklebende Material aufgetragen.

Die erfindungsgemässen Schmelzklebstoffe haben einen Erweichungspunkt von 50 bis 200 °C, bestimmt nach DIN 52011 (Ring-Kugel-Methode).

Die erfindungsgemässen Schmelzklebstoffe weisen eine Viskosität auf, die es erlaubt, sie im Rahmen üblicher Auftragsverfahren einzusetzen. Vorteilhafterweise besitzen die Schmelzklebstoffe daher eine Viskosität von 500 mPas bis 30 000 mPas, bevorzugt 1000 mPas bis 25 000 mPas und insbesondere bevorzugt 1500 mPas bis 20 000 m Pas bei 100 °C, oder
400 bis 10 000 mPas, bevorzugt 1000 bis 8000 mPas und insbesondere bevorzugt 1500 bis 6 000 mPas bei 150 °C, gemessen mit einem Kegel-Platte-Viskosimeter.

Das Applikationsverfahren ist abhängig beispielsweise von der Art des zu verklebenden Materials, des gewünschten Auftragmusters des Klebstoffes (z. B. Flächenauftrag, Streifen- oder Raupenauftrag, punktförmiger Auftrag) und der Viskosität des Klebstoffes.
Bei relativ niedrigen Viskositäten geschieht die Applikation über Sprühdüsen, bei mittleren Viskositäten über Schlitzdüsen oder Extrusionsbeschichtung und bei höheren Viskositäten geschieht die Applikation beispielsweise mittels Walzenauftragssystemen.
Wird mittels einer Walze aufgetragen, so lassen sich in der Regel nur recht hohe Flächengewichte an Klebstoff realisieren. Der Walzenauftrag dient daher üblicherweise einer festen Verbindung z. B. von einzelnen Papierlagen. Für den Walzenauftrag sind beispielsweise Schmelzklebstoffe geeignet, die bei 100 bis 150°C eine Schmelzviskosität von 1.000 bis et 6.000, insbesondere 2.000 bis 3.000 mPas aufweisen (Kegel-Platte-Viskosimeter).
Mittels Walzenauftrag ist beispielsweise die Herstellung von befeuchtungsklebrigen Materialien möglich.
Wird der Schmelzklebstoff mittels einer Schlitzdüse aufgetragen, so wird dazu in der Regel ein Schmelzklebstoff eingesetzt, der bei 100 bis 150°C eine Schmelzviskosität (Kegel-Platte-Viskosimeter) von 400 bis 20.000 mPas, insbesondere 600 bis 5.000 mPas aufweist.
Zur Verklebung von Tissues wird vorzugsweise der Auftrag des Schmelzklebstoffs mittels einer Sprühdüse bevorzugt, wobei kein vollflächiger Auftrag erzeugt wird. Die Tissueverklebung läßt sich sowohl mittels atomisierender als auch mittels nichtatomisierender Sprühdüsen durchführen, im letzteren Fall wird auch von Spinnsprühen gesprochen.
Atomisierende Sprühdüsen erfordern in der Regel einen Schmelzklebstoff, der bei 100 bis 150°C eine Schmelzviskosität von 400 bis 10.000, insbesondere et 600 bis et 5.000 mPas (Kegel-Platte-Viskosimeter) aufweist. Nichtatomisierende Sprühdüsen erfordern Schmelzklebstoffe mit einer geringfügig höheren Viskosität, um die erforderliche Fadenkohäsion zu gewährleisten. Geeignet sind beispielsweise Schmelzklebstoffe mit einer Schmelzviskosität von 3.000 bis 10.000 mPas (Kegel-Platte-Viskosimeter) bei einer Temperatur von 100 bis 50°C.
In der Getränke-Industrie ist entsprechend eine Etikettierung auf Walzenauftragssystemen (z. B. Krones Canmatic), Segmentauftragssystemen (z. B. Krones Contiroll), oder bei geeigneter Formulierung auf handelsüblichen Düsensystemen (z. B. der Fa. Nordson) möglich.

Aufgrund des ausgewogenen Verhältnisses von Kohäsion zu Adhäsion verfügt der erfindungsgemäße Schmelzklebstoff insbesondere auf Verpackungsmaschinen über gute Maschinenlaufeigenschaften, das heißt er zeigt keinen Fadenzug und die Verschmutzung ist, sofern sie überhaupt auftritt, gering. Sollten Verschmutzungen auftreten, so lassen sich diese mit geringem mechanischen Aufwand (z. B. Bürste, Putzlappen) und Leitungswasser entfernen.

Die erfindungsgemäßen Schmelzklebstoffe werden zum Verkleben von recyclebaren bzw. mehrfach verwendbaren Materialien verwendet.
Unter recyclebaren bzw. mehrfach verwendbaren Materialien werden beispielsweise cellulosehaltige Materialien, Glas, Metall oder Kunststoffe, wie z.B. PET, PEN, PP, PVC, PS und PE, verstanden.
Zu den cellulosehaltigen Materialien gehören beispielsweise lackiertes oder unlackiertes Papier bzw. entsprechende Pappen bzw. entsprechende papierhaltige Materialien oder Spanholz.
Gegenstand der Erfindung sind daher auch verklebte cellulosehaltige Materialien, die den erfindungsgemäßen Schmelzklebstoff enthalten.

Die erfindungsgemäßen wasserlöslichen oder wasserdispergierbaren Schmelzklebstoffe finden ganz allgemein im Verpackungswesen, insbesondere beim Kartonverschluss, der Buchbinderei, bei der Herstellung von mehrlagig verklebten Papieren , insbesondere Tissue und bei der Etikettierung Anwendung.
Je nach Art und Menge des eingesetzten Zuckeralkohols und des wasserlöslichen oder wasserdispergierbaren Polymeren weisen die erfindungsgemäßen Schmelzklebstoffe haftklebrige Eigenschaften auf. Die so erhaltenen Haftschmelzklebstoffe können zur Herstellung von wiederverschliessbaren Verpackungen eingesetzt werden.
Je nach Art und Menge des eingesetzten Zuckeralkohols und des wasserlöslichen oder wasserdispergierbaren Polymeren lassen sich Schmelzklebstoffe formulieren, die einen wiederanfeuchtbaren Klebstofffilm ergeben. Diese erfindungsgemäßen Schmelzklebstoffe eignen sich beispielsweise zur Herstellung von Briefumschlägen, Briefmarken oder Etiketten.
Die erfindungsgemäßen Schmelzklebstoffe eignen sich insbesondere für Papierverbunde, die einer Verwendung als Hygienepapier dienen sollen. Unter "Hygienepapier" werden im Rahmen der vorliegenden Erfindung überwiegend in Haushalt, in Gemeinschaftseinrichtungen und zur persönlichen Hygiene verwendete Papiersorten, z. B. Haushaltstücher (Küchenkrepp), Papierhandtücher, Papiertaschentücher, Papierservietten, Toilettenpapier, Kinderwindeln und dergleichen verstanden. Die erfindungsgemäßen Schmelzklebstoffe eignen sich insbesondere für die Herstellung von Papierverbunden aus Tissue.

Eine weitere bevorzugte Anwendung des erfindungsgemäßen Schmelzklebstoffes liegt in der Etikettierung von wiederverwertbaren Materialien, insbesondere Hohlkörpern aus PET, die mit Papier- oder Kunststoffetiketten etikettiert sind.
Eine konkrete Anwendung der erfindungsgemäßen Schmelzklebstoffe ist die Etikettierung von PET-Hohlkörpern, die nach dem Gebrauch wiederverwendet werden sollen (Me hrwegsysteme) bzw. stofflich recycelt werden.
Bei den derzeit angewendeten Recyclingmethoden werden die mit Schmelzklebstoffen etikettierten Hohlkörper sortenrein sortiert, zerkleinert und anschließend in einem energieintensiven und langwierigen Waschprozeß in Wasser- und Laugenbädern gewaschen. Hierbei ist es notwendig sämtliche Verunreinigungen (einschließlich Klebstoff) so weit als möglich vom PET zu entfernen, um eine möglichst hohe Reinheit und damit Wiedereinsetzbarkeit für PET-Gebinde (unter Umständen auch für Lebensmittel) mit einem möglichst hohen Recyclinganteil (bis zu 30 %) zu gewährleisten.
Für den Waschprozeß typisch sind Waschlaugenkonzentrationen von 2 % und - Temperaturen von 90 °C. Die Verweilzeit kann bis zu 20 Minuten betragen.
Die erfindungsgemäßen Schmelzklebstoffe sind sowohl gut kalt- als auch warmwasserlöslich, ist der Schmelzklebstoff nicht haftklebrig, entfällt die Einstellung eines alkalischen Mediums. Die Verweilzeit kann dadurch auf 10 Minuten und die Waschtemperatur auf 40 - 50 °C gesenkt werden.
Durch die Verwendung der erfindungsgemäßen Schmelzklebstoffe wird im alkalischen Medium (typischerweise 0,5 - 2 % ige NaOH Lösung) oder in Wasser eine gute Ablösung von den Wertstoffen erzielt. Außerdem wird eine Wiederanlagerung des Klebstoffes als sogenannte "Stickies" an den Wertstoff bzw. innerhalb der Recyclinganlagen wirkungsvoll verhindert.
Wenn der erfindungsgemäße Schmelzklebstoff haftklebrig ist, wird er im alkalischen Medium unklebrig werden und sich nicht am Werkstoff oder an den entsprechenden Anlagen wieder anlagern.
Mit den erfindungsgemäßen Schmelzklebstoffen sind aber nicht nur schonendere Waschbedingungen möglich, sondern es wird auch eine hohe Qualität des Recycling-PET erreicht, die die Wiederverwendung bei neuen Flaschen auch in höheren als sonst üblichen Anteilen erlaubt (> 50 %).
Ein weiterer Vorteil der erfindungsgemäßen Schmelzklebstoffe ist die sehr gute Umweltverträglichkeit. Hierzu gehört insbesondere die gute biologische Abbaubarkeit.

Die Erfindung wird nun im einzelnen erläutert.

### I. Ausgangsmaterialien

**Tab.1**

| **Name** | **Substanz** | **Bezugsquelle** |
|---|---|---|
| AC Polyethylen 629 | Polyethylen oxidiert | Honeywell |
| AQ 2350 | sulfongruppenhaltiger Polyester | Eastman |
| Avedex W90 | Weißdextrin auf Basis Kartoffelstärke | Avebe |
| C*PUR O1921 | Maltodextrin | Cerestar |
| Collys BR | Weizenstärke | Roquette Frères |
| Diglycerin | Diglycerin | Solvay |
| Emdex weiß | Weißdextrin | Emsland |
| Evatane 28 - 800 | Ethylen-Vinylacetat-Copolymer | AtoFina |
| Fructose | Fructose | Amylum |
| D-Glukose | D-Glukose | Merck |
| Glycerin | Glycerin | Merck |
| Irganox B 225 | Tris(2,4-di-tert-butylphenyl)phosphit-Pentaerythrittetrakis [3-(3,5-di-tert-butyl-4-hydroxyphenyl)propionat]-Gemisch | Ciba |
| Isomalt Typ F | Isomalt | Palatinit Süßungsmittel GmbH |
| Lactitol | Lactit | Danisco Sweeteners |
| Litesse III | Polydextrose | Danisco Sweeteners |
| Maltisorb P 200 | Maltit | Roquette Frères |
| Mannit 60 | Mannit | Roquette Frères |
| Methyl-alpha-Glucopyranoside | Methyl-alpha-Glucopyranoside | Aldrich |
| Monomuls 90 L 12 | Glycerinmonolaurat | Cognis |
| Monomuls 90 O 18 | Glycerinmonooleat | Cognis |
| Petrolite C 4040 | Kohlenwasserstoff Mikrowachs | Baker Petrolite |
| Polysorb 75/08/55 | Hydrierter Glucosesirup | Roquette Frères |
| Saccharose | Saccharose | Merck |
| Solfarex A 55 | Kartoffelstärkehydroxyethylether | Avebe |
| Sorbidex S 16601 | Sorbit | Cerestar |
| Sorbitanmonolaurat | Sorbitanmonolaurat | Aldrich |
| Xylitol | Xylit | Danisco Sweeteners |

### II. Beispiele

Die in den Beispielen (Tabellen 2 bis 5) angegebenen Mengen stellen Gewichtsanteile dar

**Tab. 2**

| **Beispiel** | **1** | **2** | **3** | **4** | **5** |
|---|---|---|---|---|---|
| **Maltit** | 70,00 | 50,00 | | | |
| **Lactit** | | | 50,00 | | |
| **Isomalt** | | | | 70,00 | 50,00 |
| **Glycerin** | 7,00 | 25,00 | 15,00 | 4,30 | 21,00 |
| **AQ 2350** | 30,00 | 50,00 | 50,00 | 30,00 | 50,00 |
| **Irganox B 225** | 0,50 | 0,50 | 0,50 | 0,50 | 0,50 |
| **Viskosität (mPas)¹:** | 3360 | 1120 | 3200 | 4000 | 2240 |

| | | | | | |
|---|---|---|---|---|---|
| ¹ Viskosität: Schmelzviskosität gemessen bei 150 °C; andere Temperaturen in Klammern | | | | | |

**Tab. 3**

| **Beispiel** | **6** | **7** | **8** | **9** | **10** |
|---|---|---|---|---|---|
| **Sorbit** | 69,50 | 55,60 | 49,60 | 66,00 | 62,50 |
| **Glycerin** | | 20,00 | | | |
| **Diglycerin** | | | 28,60 | | |
| **Avedex W 90** | 18,00 | 14,40 | 12,80 | 17,10 | 16,00 |
| **Collys BR** | 12,00 | 9,50 | 8,50 | 11,40 | 11,00 |
| **AQ 2350** | | | | 5,00 | 10,00 |
| **Irganox B 225** | 0,50 | 0,50 | 0,50 | 0,50 | 0,50 |
| **Viskosität (mPas)¹:** | 4500 (140°C) | 2500 (130°C) | 2100 (130°C) | 2500 | 3780 |

| | | | | | |
|---|---|---|---|---|---|
| ¹ Viskosität: Schmelzviskosität gemessen bei 150 °C; andere Temperaturen in Klammern | | | | | |

**Tab. 4**

| **Beispiel** | **11** | **12** | **13** | **14** | **15** | **16** | **17** | **18** | **19** | **20** |
|---|---|---|---|---|---|---|---|---|---|---|
| Sorbit | | | | | 30,00 | 20,00 | 4,50 | 28,00 | | |
| **Maltit** | 42,60 | 42,60 | 42,60 | | | | | | | |
| **Lactit** | | | | 42,60 | | | | | | |
| **Isomalt** | | | | | 49,70 | 39,70 | | | | |
| **Mannit** | | | | | | | 43,85 | | | |
| **Polysorb 75/08/55** | | | | | | | | | | 49,8 5 |
| **C*PUR 01921** | | | | | | 20,00 | | | | |
| **Litesse III** | | | | | | | | 43,85 | 38,85 | |
| **Glycerin** | | | | | | | | | | |
| **Diglycerin** | | | | | | | | | 15,00 | |
| **Solfarex A 55** | | | | | 20,00 | | | | | |
| **AQ 2350** | 5,00 | 5,00 | 5,00 | 5,00 | | 20,00 | 5,00 | 5,00 | 5,00 | 5,00 |
| **Sorbitanmonolaur at** | 2,25 | | | | | | | | | |
| **Monomuls 90 O 18** | | **2,25** | | | | | | | | |
| **Monomuls 90 L 12** | | | 2,25 | 2,25 | | | | | | |
| **Irganox B 225** | 0,15 | 0,15 | 0,15 | 0,15 | 0,30 | 0,30 | 0,15 | 0,15 | 0,15 | 0,15 |
| **Viskosität (mPas)¹:** | 4320 | 4300 | 3900 | 4900 | 640 | 1280 0 | 2480 | 2700 | 2590 | 6720 |

| | | | | | | | | | | |
|---|---|---|---|---|---|---|---|---|---|---|
| ¹ Viskosität: Schmelzviskosität gemessen bei 150 °C; andere Temperaturen in Klammern | | | | | | | | | | |

### III. Messergebnisse

### III-1. Thermostabilität

**Tab. 5**

| **Farbzahl (Gardner) nach Lagerung bei 160 °C** | | | | | |
|---|---|---|---|---|---|
| | **Vergleich 1** | **Vergleich 2** | **Vergleich 3** | **Beispiel A** | **Beispiel B** |
| **Sorbit** | | | | 40 | 45 |
| **Isomalt** | | | | | 45 |
| **Methylglycosid** | 50 | 72,2 | 20 | | |
| **Glucose** | 25 | | 10 | | |
| **Emdex weiß** | | | 20 | | 10 |
| **Avedex W 90** | 25 | | | | |
| **C*PUR 01921** | | 27,8 | | | |
| **Petrolite C 4040** | | | 10 | | |
| **AC Polyethylen 629** | | | 10 | | |
| **Evatane 28 - 800** | | | 30 | | |
| **AQ235O** | | | | 10 | |

| **Farbzahl (Gardner) nach Lagerung bei 160 °C:** | | | | | |
|---|---|---|---|---|---|
| **Start** | 16-17 | 11 - 12 | 12-13 | 2-3 | 4-5 |
| **Nach 18 Stunden** | >18 | 15 - 16 | >18 | 3 - 4 | 5 - 6 |

**Tab. 6**

| | | | |
|---|---|---|---|
| | Schmelzviskosität¹ nach Lagerung bei 150 °C | | |

| Beispiel | **Start** | **Nach 24 Stunden** | **Nach 48 Stunden** |
|---|---|---|---|
| **1** | 3360 mPas | 2376 mPas | 2720 mPas |
| **2** | 1120 mPas | 972 mPas | 972 mPas |
| **3** | 3200 mPas | 2560 mPas | 2560 mPas |
| **4** | 4000 mPas | 4480 mPas | 3520 mPas |
| **5** | 2240 mPas | 1280 mPas | 1280 mPas |

| | | | |
|---|---|---|---|
| ¹ Schmelzviskosität: gemessen bei 150 °C | | | |

### III.-2 Verklebungstest

**Tab. 7**

| **Beispiele** | **1 min** | **1 h** | **24 h** |
|---|---|---|---|
| **1** | 3 | 2 | 1 |
| **2** | 3 | 3 | 3 |
| **3** | 3 | 2 | 1 |
| **4** | 3 | 3 | 3 |
| **5** | 2 | 1 | 1 |

**Tab. 8**

| **Beispiele** | **1 min** | **1 h** | **24 h** |
|---|---|---|---|
| **6** | 2 | 3 | 3 |
| **7** | 1 | 1 | 2 |
| **8** | 1 | 1 | 1 |
| **9** | 3 | 3 | 1 |
| **10** | 3 | 3 | 1 |

### IV Beschreibung der Meßmethoden

### □ Schmelzviskosität Kegel-Platte-Viskosimeter

Die Bestimmung der Schmelzviskosität erfolgte nach DIN 53229 mit einem Kegel-Platte-Viscosimeter nach ICI.

### □ Thermostabilität

Die Substanzen wurden in ein Reagenzlas, Durchmesser 16 mm, gefüllt, im Wärmeschrank aufgeschmolzen und gelagert. Die jeweiligen Temperaturen sind den Tabellen zu entnehmen. Nach vorgegebenen Zeiten wurde die Proben entnommen mit einer Farbskala nach Gardner verglichen (Gardner Color Standards For Liquids, 1963 Series von Gardner Laboratory).

### □ Verklebungstest

Ein Klebstofffilm wurde aus der Schmelze mit einem vorgewärmten 25µ filmziehrahmen Modell 360, Breite 60 mm, der Fa. Erichsen GmbH auf ein DIN A4 Kopierpapier der Fa. Soennecken (5015 Spezial®, 80 g) aufgerakelt. Unmittelbar anschließend wurde ein 3-lagiges Blatt Tissuepapier 24,2 x 25,8 cm (Tork® Küchenrolle der Fa. SCA Hygiene Products) aufgelegt und dieses sofort mit einer 9,5 kg Edelstahlwalze manuell durch einmaliges vor- und zurückrollen angedrückt.

Anschließend wurde der Verbund nach vorgegebenen Zeiten durch manuelles 90°-Schälen des Tissuepapiers auf Haftung geprüft.

### Bewertung:

0 Die zwei oberen Lagen Lagen des Tissuepapiers ließen sich nur abziehen unter Delamination der unteren Tissuelage vom Kopierpapier.
1 Die zwei oberen Lagen des Tissuepapiers ließen sich abziehen ohne Delaminierung der unteren Tissuelage zum Kopierpapier. Die unterste Lage des Tissuepapiers ließ sich anschließend ohne visuell erkennbaren Faserausriß vom Kopierpapier abziehen.
2 Die zwei oberen Lagen des Tissuepapiers ließen sich abziehen ohne Haftungsverlust der unteren Tissuelage zum Kopierpapier. Die unterste Lage des Tissuepapiers ließ sich anschließend nur mit teilweisem Faserausriß vom Kopierpapier abziehen.
3 Die zwei oberen Lagen des Tissuepapiers ließen sich abziehen ohne Haftungsverlust der unteren Tissuelage zum Kopierpapier. Die unterste Lage des Tissuepapiers ließ sich anschließend nur mit starkem Faserausriß vom Kopierpapier abziehen oder wurde dabei zerrissen:

### □ Herstellung der Beispiele

Ein einem Aluminiumbecher, Innendurchmesser 6,3 cm, der sich in einem Metallblock-Thermostat der Fa. Liebisch befand, wurden zunächst jeweils die Zuckeralkohole aufgeschmolzen, üblicherweise bei 140 °C bis 150 °C, im Fall von Isomalt bei 160 °C und im Fall von Mannit bei 170 °C. Im Falle von Polysorb wurde dieses zunächst unter allmählicher Temperatursteigerung solange gerührt, bis das enthaltene Wasser verdampft war. Unter Rühren mit einem Propellerrührer aus Edelstahl wurden dann die restlichen Substanzen nach und nach in der in den jeweiligen Tabellen aufgeführten Reihenfolge zugegeben, aufgeschmolzen und homogenisiert. Anschließend wurden die Prüfungen durchgeführt.

Die Vergleichsbeispiele 1 bis 3 sind nicht erfindungsgemäß. Sie sind der WO92/22606 entnommen und entsprechen den dortigen Beispielen "Example 5", "Example 6" und "Example 7".

## Patentansprüche

1. Schmelzklebstoff, enthaltend
A) 20 bis 95 Gew.-% mindestens eines Zuckeralkohols und
B) 5 bis 80 Gew.-% mindestens eines wasserlöslichen oder wasserdispergierbaren Polymeren und
C) 0 bis 20 Gew.-% in Wasser nichtlösliche thermoplastische Polymere.

2. Schmelzklebstoff nach Anspruch 1, **dadurch gekennzeichnet, dass** er nach Lagerung bei 180°C über einen Zeitraum von 3 Stunden eine Farbzahl nach Gardner (DIN ISO 4630) kleiner bis gleich 10 aufweist.

3. Schmelzklebstoff nach Anspruch 1 oder 2, **dadurch gekennzeichnet, dass** der Zuckeralkohol ein Aldit ist.

4. Schmelzklebstoff nach einem der Ansprüche 1 bis 3, **dadurch gekennzeichnet, dass** der Zuckeralkohol Mannit und/oder Sorbit ist.

5. Schmelzklebstoff nach einem der Ansprüche 1 bis 4 **dadurch gekennzeichnet, dass** der Zuckeralkohol ein hydriertes Saccharid ist.

6. Schmelzklebstoff nach einem der Ansprüche 1 bis 5, **dadurch gekennzeichnet, dass** der Zuckeralkohol ausgewählt ist aus der Gruppe Isomalt, Maltitol, Lactitol, hydrierter Glukose-Sirup, hydrierter Maltit-Sirup, Pentaerythrit, Dipentaerythrit, Polydextrose oder Mischungen daraus.

7. Schmelzklebstoff nach einem der Ansprüche 1 bis 6, **dadurch gekennzeichnet, daß** der Zuckeralkohol eine Mischung aus Aldit und hydriertem Saccharid ist.

8. Schmelzklebstoff nach einem der Ansprüche 1 bis 7, **dadurch gekennzeichnet, daß** der Zuckeralkohol bis 50 Gew.-%, bezogen auf den Zuckeralkohol, durch mindestens ein flüssiges Polyol ersetzt ist.

9. Schmelzklebstoff nach einem der Ansprüche 1 bis 8, **dadurch gekennzeichnet, dass** das mindestens eine wasserlösliche oder wasserdispergierbare Polymer ein Polymer aus der Gruppe Polysaccharide, Polyalkylenoxide, Polyvinylalkohole, Polyvinylpyrrolidone, Copolymere des Vinylpyrrolidons mit vinylischen Monomeren oder Acrylsäure oder deren Ester ist.

10. Schmelzklebstoff nach Anspruch 9, **dadurch gekennzeichnet, dass** als wasserlösliches oder wasserdispergierbares Polymer ein Polysaccharid ausgewählt wird aus der Gruppe der Xyloglucane, Glucomannoglycane, Galactomannane, Arabinogalactane, Galacturonane, Laminaran, Glykane, Chitin, Chitosan, Glucane, Mannane, Arabinane, Galactane, Xylane, Hemicellulose, und Pflanzenpolysaccharide.

11. Schmelzklebstoff nach Anspruch 10, **dadurch gekennzeichnet, dass** aus der Gruppe der Glucane Stärke, ausgewählt wird.

12. Schmelzklebstoff nach Anspruch 10, **dadurch gekennzeichnet, dass** aus der Gruppe der Glucane ein nichtionischer, anionischer oder kationischer Stärkeether, Stärkeester, oxidierte Stärke oder ein Propfpolymer auf Stärkebasis, ausgewählt wird.

13. Schmelzklebstoff nach Anspruch 10, **dadurch gekennzeichnet, dass** aus der Gruppe der Glucane ein Abbauprodukt der Stärke, ausgewählt wird.

14. Schmelzklebstoff nach Anspruch 10, **dadurch gekennzeichnet, dass** aus der Gruppe der Glucane modifizierte Stärke, ausgewählt wird.

15. Schmelzklebstoff nach Anspruch 10, **dadurch gekennzeichnet, dass** aus der Gruppe der Glucane, Cellulose und deren Derivate, ausgewählt wird.

16. Schmelzklebstoff nach einem der Ansprüche 1 bis 8, **dadurch gekennzeichnet, dass** das wasserlösliche Polymer ein Polymer ist aus der Gruppe: Polyvinylmethylether, Polyethyloxazolin, Copolymere des Ethyloxazolins mit anderen Alkyloxazolinen, Polyamide, Polyester, oder Polyurethane.

17. Schmelzklebstoff nach Anspruch 16, enthaltend
A) 40 bis 95 Gew.-% mindestens eines Zuckeralkohols
und
B) 5 bis 60 Gew.-% mindestens eines sulfongruppenhaltigen Polyesters.

18. Verfahren zur Herstellung eines Schmelzklebstoffes nach mindestens einem der Ansprüche 1 bis 17, **dadurch gekennzeichnet, dass** man
a) den Zuckeralkohol bei einer Temperatur von 60 bis 260°C aufschmilzt,
b) in die Schmelze des Zuckeralkohls das mindestens eine wasserlösliche oder wasserdispergierbare Polymer sowie ggf. weitere, in Wasser nichtlösliche thermoplastische Polymere sowie weitere geeignete Zusätze zugibt,
c) bis zur Homogenität rührt und
d) durch Anlegen von Vakuum den Wassergehalt auf kleiner gleich 5 Gew.-% Wasser einstellt.

19. Verwendung eines Schmelzklebstoffes nach mindestens einem der Ansprüche 1 bis 17 und hergestellt nach Anspruch 18 zum Verkleben von recyclebaren bzw. mehrfach verwendbaren Materialien wie cellulosehaltige Materialien, Glas, Metall oder Kunststoffen.

20. Verwendung eines Schmelzklebstoffes nach Anspruch 19 für den Kartonverschluss, zur Herstellung von mehrlagig verklebten Papieren in der Buchbinderei und zur Etikettierung.

21. Verklebte cellulosehaltige Materialien, enthaltend ein Schmelzklebstoff nach einem der Ansprüche 1 bis 17.

## Claims

1. Hotmelt adhesive containing
A) 20 to 95% by weight of at least one sugar alcohol and
B) 5 to 80% by weight of at least one water-soluble or water-dispersible polymer and
C) 0 to 20% by weight of water-insoluble thermoplastic polymers.

2. Hotmelt adhesive as claimed in claim 1, **characterized in that** it has a Gardner colour value (DIN ISO 4630) of 10 or lower after storage for 3 hours at 180°C.

3. Hotmelt adhesive as claimed in claim 1 or 2, **characterized in that** the sugar alcohol is an alditol.

4. Hotmelt adhesive as claimed in any of claims 1 to 3, **characterized in that** the sugar alcohol is mannitol and/or sorbitol.

5. Hotmelt adhesive as claimed in any of claims 1 to 4, **characterized in that** the sugar alcohol is a hydrogenated saccharide.

6. Hotmelt adhesive as claimed in any of claims 1 to 5, **characterized in that** the sugar alcohol is selected from the group consisting of isomalt, maltitol, lactitol, hydrogenated glucose syrup, hydrogenated maltitol syrup, pentaerythritol, dipentaerythritol, polydextrose or mixtures thereof.

7. Hotmelt adhesive as claimed in any of claims 1 to 6, **characterized in that** the sugar alcohol is a mixture of alditol and hydrogenated saccharide.

8. Hotmelt adhesive as claimed in any of claims 1 to 7, **characterized in that** up to 50% by weight of the sugar alcohol, based on the sugar alcohol, is replaced by at least one liquid polyol.

9. Hotmelt adhesive as claimed in any of claims 1 to 8, **characterized in that** at least one water-soluble or water-dispersible polymer is a polymer from the group of polysaccharides, polyalkylene oxides, polyvinyl alcohols, polyvinyl pyrrolidones, copolymers of vinyl pyrrolidone with vinyl monomers or acrylic acid or esters thereof.

10. Hotmelt adhesive as claimed in claim 9, **characterized in that** the water-soluble or water-dispersible polymer is a polysaccharide selected from the group of xyloglucans, glucomannoglycans, galactomannans, arabinogalactans, galacturonans, laminaran, glycans, chitin, chitosan, glucans, mannans, arabinans, galactans, xylans, hemicellulose and plant polysaccharides.

11. Hotmelt adhesive as claimed in claim 10, **characterized in that** starch is selected from the group of glucans.

12. Hotmelt adhesive as claimed in claim 10, **characterized in that** a nonionic, anionic or cationic starch ether, starch ester, oxidized starch or a starch-based graft polymer is selected from the group of glucans.

13. Hotmelt adhesive as claimed in claim 10, **characterized in that** a starch degradation product is selected from the group of glucans.

14. Hotmelt adhesive as claimed in claim 10, **characterized in that** modified starch is selected from the group of glucans.

15. Hotmelt adhesive as claimed in claim 10, **characterized in that** cellulose and cellulose derivatives is/are selected from the group of glucans.

16. Hotmelt adhesive as claimed in any of claims 1 to 8, **characterized in that** the water-soluble polymer is a polymer from the group consisting of polyvinyl methyl ether, polyethyl oxazoline, copolymers of ethyl oxazoline with other alkyl oxazolines, polyamides, polyesters or polyurethanes.

17. Hotmelt adhesive as claimed in claim 16 containing
A) 40 to 95% by weight of at least one sugar alcohol and
B) 5 to 60% by weight of at least one polyester containing sulfone groups.

18. A process for the production of the hotmelt adhesive claimed in at least one of claims 1 to 17, **characterized in that**
a) the sugar alcohol is melted at a temperature of 60 to 260°C,
b) the at least one water-soluble or water-dispersible polymer and optionally other water-insoluble thermoplastic polymers and other suitable additives are then introduced into the melt of the sugar alcohol,
c) the whole is stirred to homogeneity and
d) the water content is adjusted to 5% by weight water or less by application of vacuum.

19. The use of the hotmelt adhesive claimed in at least one of claims 1 to 17 and produced by the process claimed in claim 18 for bonding recyclable or reusable materials, such as cellulose-containing materials, glass, metals or plastics.

20. The use of a hotmelt adhesive as claimed in claim 19 for closing boxes, for the production of multilayer papers in bookbinding and for labelling

21. Bonded cellulose-containing materials containing the hotmelt adhesive claimed in any of claims 1 to 17.

## Revendications

1. Colle fusible, contenant
A) 20 à 95% en poids d'au moins un alcool de sucre et
B) 5 à 80% en poids d'au moins un polymère hydrosoluble ou dispersible dans l'eau et
C) 0 à 20% en poids de polymères thermoplastiques insolubles dans l'eau.

2. Colle fusible selon la revendication 1, **caractérisée en ce qu'**elle présente un indice de couleur selon Gardner (DIN ISO 4630) inférieur ou égal à 10 après entreposage à 180°C pendant une durée de 3 heures.

3. Colle fusible selon la revendication 1 ou 2, **caractérisée en ce que** l'alcool de sucre est un alditol.

4. Colle fusible selon l'une quelconque des revendications 1 à 3, **caractérisée en ce que** l'alcool de sucre est le mannitol et/ou le sorbitol.

5. Colle fusible selon l'une quelconque des revendications 1 à 4, **caractérisée en ce que** l'alcool de sucre est un saccharide hydrogéné.

6. Colle fusible selon l'une quelconque des revendications 1 à 5, **caractérisée en ce que** l'alcool de sucre est choisi dans le groupe formé par l'isomaltol, le maltitol, le lactitol, le sirop de glucose hydrogéné, le sirop de maltitol hydrogéné, le pentaérythritol, le dipentaérythritol, le polydextrose, ou des mélanges de ceux-ci.

7. Colle fusible selon l'une quelconque des revendications 1 à 6, **caractérisée en ce que** l'alcool de sucre est un mélange d'alditol et de saccharide hydrogéné.

8. Colle fusible selon l'une quelconque des revendications 1 à 7, **caractérisée en ce que** l'alcool de sucre est remplacé par au moins un polyol liquide à raison de jusqu'à 50% en poids, par rapport à l'alcool de sucre.

9. Colle fusible selon l'une quelconque des revendications 1 à 8, **caractérisée en ce que** ledit au moins un polymère hydrosoluble ou dispersible dans l'eau, est un polymère issu du groupe formé par les polysaccharides, les poly(oxyde d'alkylène)s, les poly(alcool vinylique)s, les polyvinylpyrrolidones, les copolymères de la vinylpyrrolidone avec des monomères vinyliques ou l'acide acrylique ou leurs esters.

10. Colle fusible selon la revendication 9, **caractérisée en ce qu'**un polysaccharide en tant que polymère hydrosoluble ou dispersible dans l'eau est choisi dans le groupe formé par les xyloglucanes, les glucomannoglycanes, les galactomannanes, les arabinogalactanes, les galacturonanes, le laminarane, les glycanes, la chitine, le chitosan, les glucanes, les mannanes, les arabinanes, les galactanes, les xylanes, l'hémicellulose et les polysaccharides végétaux.

11. Colle fusible selon la revendication 10, **caractérisée en ce que** l'amidon est choisi dans le groupe des glucanes.

12. Colle fusible selon la revendication 10, **caractérisée en ce qu'**un éther d'amidon, ester d'amidon, non ionique, anionique, ou cationique, un amidon oxydé, ou un polymère greffé à base d'amidon, est choisi dans le groupe des glucanes.

13. Colle fusible selon la revendication 10, **caractérisée en ce qu'**un produit de dégradation de l'amidon est choisi dans le groupe des glucanes.

14. Colle fusible selon la revendication 10, **caractérisée en ce qu'**un amidon modifié est choisi dans le groupe des glucanes.

15. Colle fusible selon la revendication 10, **caractérisée en ce qu'**une cellulose et ses dérivés sont choisis dans le groupe des glucanes.

16. Colle fusible selon l'une quelconque des revendications 1 à 8, **caractérisée en ce que** le polymère hydrosoluble est un polymère issu du groupe : le polyvinylméthyléther, la polyéthyloxazoline, les copolymères de l'éthyloxazoline avec d'autres alkyloxazolines, les polyamides, les polyesters, ou les polyuréthanes.

17. Colle fusible selon la revendication 16, contenant
A) 40 à 95% en poids d'au moins un alcool de sucre et
B) 5 à 60% en poids d'au moins un polyester contenant des groupes sulfone.

18. Procédé de préparation d'une colle fusible selon au moins l'une quelconque des revendications 1 à 17, **caractérisée en ce que** l'on
a) fond l'alcool de sucre à une température de 60 à 260°C,
b) dans la masse fondue de l'alcool de sucre, on ajoute ledit au moins un polymère hydrosoluble ou dispersible dans l'eau, ainsi qu'éventuellement d'autres polymères thermoplastiques insolubles dans l'eau ainsi que d'autres additifs appropriés,
c) on agite jusqu'à homogénéité et
d) en faisant le vide, on ajuste la teneur en eau à ≤ 5% en poids d'eau.

19. Utilisation d'une colle fusible selon au moins l'une quelconque des revendications 1 à 17, et préparée selon la revendication 18, pour coller des matériaux recyclables ou plusieurs fois réutilisables comme les matériaux contenant de la cellulose, le verre, le métal ou les matières plastiques.

20. Utilisation d'une colle fusible selon la revendication 19, pour la fermeture de cartons, pour préparer des papiers collés en plusieurs couches, dans la reliure de livres, et pour l'étiquetage.

21. Matériaux collés contenant de la cellulose, contenant une colle fusible selon l'une quelconque des revendications 1 à 17.
